# EUROPEAN PATENT APPLICATION

(11) **EP 2 000 338 A1**
(43) Date of publication of application: **10.12.2008**
(21) Application number: 08010212.2
(22) Date of filing: 04.06.2008
(51) Int. Cl.: B60H 1/00, B60H 1/32

(54) **Water discharge structure of vehicle air-conditioning system**

(30) Priority: 06.06.2007 JP 2007150761
(71) Applicant: Calsonic Kansei Corporation, Tokyo 164-8602 (JP)
(72) Inventor: Kenichiro Sawano, Tokyo 164-8602 (JP)
(74) Representative: Grünecker, Kinkeldey, Stockmair & Schwanhäusser Anwaltssozietät

(57) **Abstract**

A water discharge structure of a vehicle air-conditioning system, which has an intake duct (2), a centrifugal fan (4), and an air-conditioning case (5), and discharges water that enters toward the centrifugal fan from the intake duct outside the air-conditioning case, includes a first communicating section which communicates a lower portion of a scroll casing for housing the centrifugal fan to a bottom wall face of the intake duct, a second communicating section which communicates an upper portion of the air-conditioning case to the lower portion of the scroll casing, a water discharge groove (12) formed along an inner face of an air distribution path of the air-conditioning case from an inner face position of the air-conditioning case where the water drops from the second communicating section, and a drain structure which is disposed in a lower portion of the air-conditioning case.

## Description

### BACKGROUND OF THE INVENTION

### Field of the Invention

The present invention relates to a water discharge structure of a vehicle air-conditioning system which has an intake duct, a centrifugal fan, and an air-canditioning case, and discharges water that enters toward the centrifugal fan from the intake duct outside the air-conditioning case.

### Description of the Related Art

Conventionally, there is known a water discharge structure of a vehicle air-conditioning system having a path which guides water retained in a bottom wall portion of an intake duct into a blower by differential pressure between the blower and the intake duct (for example, refer to JP2004-98782A). In this water discharge structure, after the water guided into the blower by the differential pressure is sent by the blower, the water is received by an evaporator, and is discharged as condensate water from a drainpipe provided in the lower part of the evaporator. As a result, a vehicle air-conditioning system can be provided which prevents rainwater from being retained in the intake duct without providing a drainpipe in the intake duct.

However, in the conventional water discharge structure of the vehicle air-conditioning system, the water guided into the blower is discharged outside by using the operation of the blower, so there is a problem in that the water guided into the blower can not be discharged outside in the stop time of the blower.

In addition, in a blower in which a motor rotation axis is horizontally disposed, since the winding angle of the scroll casing is about 300°, if the water in the form of the waterdrops that enters the intake duct flows along the bottom wall face of the duct when steam cleaning of an engine room is conducted, or water from snow or waterdrops adhered onto the inner face of the intake duct flows along the bottom wall face of the duct when the blower is stopped, the water is accumulated in the lower portion of the scroll casing. If the accumulated water freezes, there is a problem in that the blower can be damaged.

### SUMMARY OF THE INVENTION

The present invention has been made in view of the above problems, and an object of the present invention is to provide a water discharge structure of a vehicle air-conditioning system capable of discharging water accumulated in a lower portion of a scroll casing outside, preventing the generation of swash and reverse flow of the discharged water, and controlling the influence on a blowing temperature when a centrifugal fan is operated, regardless of the stopping or operation of the centrifugal fan, with a simple structure using an existing drain structure.

In order to achieve the above object, a water discharge structure of a vehicle air-conditioning system according to one embodiment of the present invention, which has an intake duct, a centrifugal fan, and an air-conditioning case, and discharges water that enters toward the centrifugal fan from the intake duct outside the air-conditioning case, includes a first communicating section which communicates a lower portion of a scroll casing for housing the centrifugal fan to a bottom wall face of the intake duct, a second communicating section which communicates an upper portion of the air-conditioning case to the lower portion of the scroll casing, a water discharge groove formed along an inner face of an air distribution path of the air-conditioning case from an inner face position of the air-conditioning case where the water drops from the second communicating section, and a drain structure which is disposed in a lower portion of the air-conditioning case, and discharges the water after passing through the water discharge groove outside the air-conditioning case.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the specification, serve to explain the principle of the invention.
FIG 1 is a sectional view in a motor rotation axis direction illustrating a vehicle air-conditioning system to which a water discharge structure according to embodiment 1 of the present invention is applied.
FIG. 2 is a sectional view in a direction orthogonal to the motor rotation axis direction shown by an A-A line in FIG 1 illustrating the vehicle air-conditioning system to which the water discharge structure according to embodiment 1 of the present invention is applied.
FIG 3 is an enlarged sectional view illustrating first and second communicating sections of FIG. 1 in the water discharge structure according to embodiment 1.
FIG 4 is an enlarged sectional view shown by a B-B line of FIG 3 illustrating the second communicating section in the water discharge structure according to embodiment 1.
FIG 5 is a view illustrating a state in which water is accumulated in a lower portion of a scroll casing in a conventional vehicle air-conditioning system including a centrifugal fan having a scroll casing with a winding angle of about 300°.
FIG 6 is a partially enlarged sectional view illustrating a major portion of the vehicle air-conditioning system to which a water discharge structure according to embodiment 2 is applied.

### DETAILED DESCRIPTION OF THE PREFERRED EMBODIMENTS

Hereinafter, embodiments of a water discharge structure of a vehicle air-conditioning system according to the present invention will be described with reference to the drawings.

### [Embodiment 1]

At first, a constitution of a water discharge structure will be described.

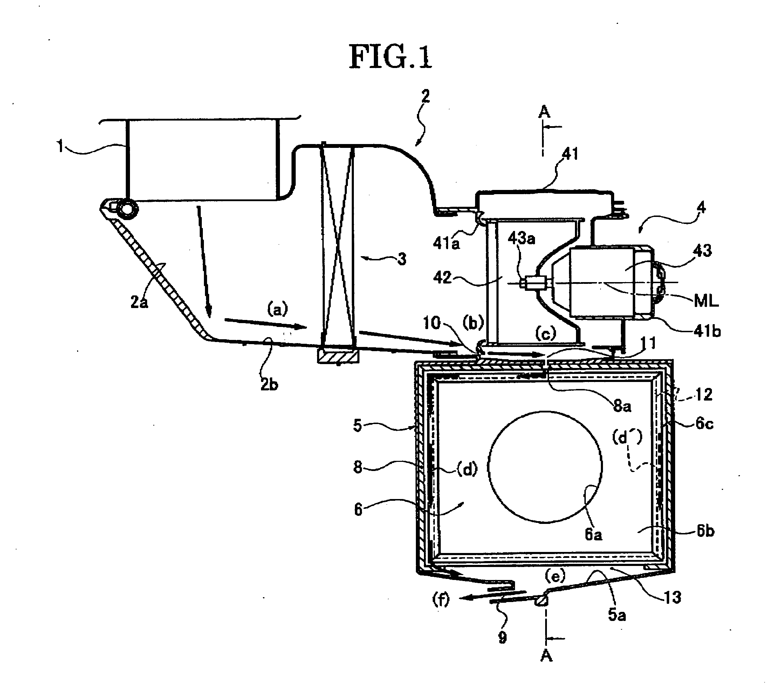

As illustrated in FIG 1, a vehicle air-conditioning system to which a water discharge structure of embodiment 1 is applied includes an inside and outside air introduction duct 1, an intake duct 2, a cleaning filter 3, a centrifugal fan 4, an air-conditioning case 5, and a dummy evaporator 6 (blow resistance member). More particularly, the vehicle air-conditioning system to which the water discharge structure of embodiment 1 is applied is a vehicle air-conditioning system for heating only, and is a variation unit which diverts an air-conditioning case of a heating and cooling vehicle air-conditioning system and has the dummy evaporator 6 instead of an evaporator in a position where the evaporator is disposed when the heating and cooling vehicle air-conditioning system is used.

The inside and outside air introduction duct 1 includes an intake door (not shown) and introduces inside air, outside air or mixed air of inside and outside air by controlling the intake door by means of an actuator.

The intake duct 2 is connected to the inside and outside air instruction duct 1, and sucks at least one of the inside air and the outside air. As illustrated in FIG 1, the cleaning filter 3, which eliminates dust, pollen or the like, is disposed in the intake duct 2. The bottom wall face of the intake duct 2 includes a first inclination bottom wall face 2a which is a portion just below the inside and outside air introduction duct 1 and inclines at a steep angle, and a second inclination bottom wall face 2b which is a portion disposed toward the centrifugal fan 4 and inclines at a low angle.

The centrifugal fan 4 is a fan through which air passes in a radial direction from the center of a bladed wheel. Since the centrifugal fan 4 blows in by applying a centrifugal force to air by the rotation of the bladed wheel, it has a high static pressure and a high blow pressure. The centrifugal fan 4 of embodiment 1 is a multi-blade fan (sirocco fan), and includes a scroll casing 41, a blower fan 42, and a fan motor 43 as illustrated in FIG. 1.

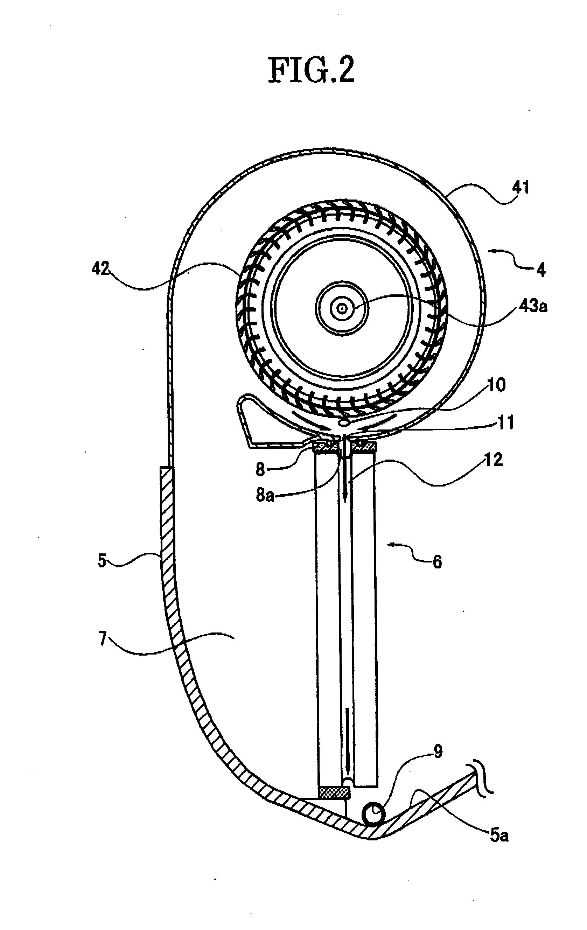

As illustrated in FIG 1, the scroll casing 41 is connected to the intake duct 2 on the suction side, and includes a circular bellmouth 41a formed in the suction position of the blower fan 42. As illustrated in FIG 1, the scroll casing 41 includes a motor supporting section 41b which supports the fan motor 43. As illustrated in FIG 2, the scroll casing 41 has a winding angle of about 300° and the lower portion provided with a puddle space by a large winding angle.

The blower fan 42 has a plurality of windings arranged in a circle as illustrated in FIG 2, and is connected to the fan motor 43 and the motor shaft 43a.

The fan motor 43 is a driving source which rotates the blower fan 42. The motor rotation axis ML is horizontally disposed as illustrated in FIG 1.

The air-conditioning case 5 (body case) houses the dummy evaporator 6, an air-mix door (not shown), a heater core (not shown) or the like. As illustrated in FIG 2, the air-conditioning case includes an air distribution path 7 formed in the portion communicating with the discharge side of the scroll casing 41.

The dummy evaporator 6 includes a resistance clad sheet portion 6b having an airflow hole 6a and a frame portion 6c formed in the entire circumference of the resistance clad sheet portion 6b, and has an airflow resistance which is set by the diameter of the airflow hole 6a similar to an airflow resistance of an evaporator for use in a heating and cooling vehicle air-conditioning system. This dummy evaporator 6 has an outer shape substantially equal to the outer shape of the evaporator for use in the heating and cooling vehicle air-conditioning system. The outer circumference of the dummy evaporator 6 is surrounded by an air-sealing waterproof sheet 8 as illustrated in FIGs. 1-4.

Next, the water discharge structure of the embodiment 1 will be described, which discharges the water flowing along the inclination bottom wall faces 2a, 2b of the intake duct 2 outside.

The water discharge structure of embodiment 1 includes a first communicating section which communicates the lower portion of the scroll casing 41 of the centrifugal fan 4 to the inclination bottom wall faces 2a, 2b of the intake duct 2, a second communicating section which communicates the upper portion of the dummy evaporator 6 to the lower portion of the scroll casing 41, a water discharge groove 12 formed along the outer circumference of the dummy evaporator 6 in the position where the water from the second communicating section drops, and a drain structure (drain pan portion 5a, drainpipe 9) which discharges the water outside after passing through the water discharge groove 12.

The first communicating section is a first water discharge hole 10 which communicates the lower position of the scroll casing 41 to the inclination bottom wall faces 2a, 2b of the intake duct 2 in the direction of the motor rotation axis ML of the centrifugal fan 4. The first water discharge hole 10 is provided in the bellmouth portion 41a of the scroll casing 41 as illustrated in FIGs. 1, 2, 3.

The second communicating section is a second water discharge hole 11 which brings the upper position of the dummy evaporator 6 in line with the lower position of the scroll casing 41, and communicates both positions in the direction orthogonal to the motor rotation axis ML of the centrifugal fan 4. The second water discharge hole 11 is formed in the scroll casing 41 (or air-conditioning case 5).

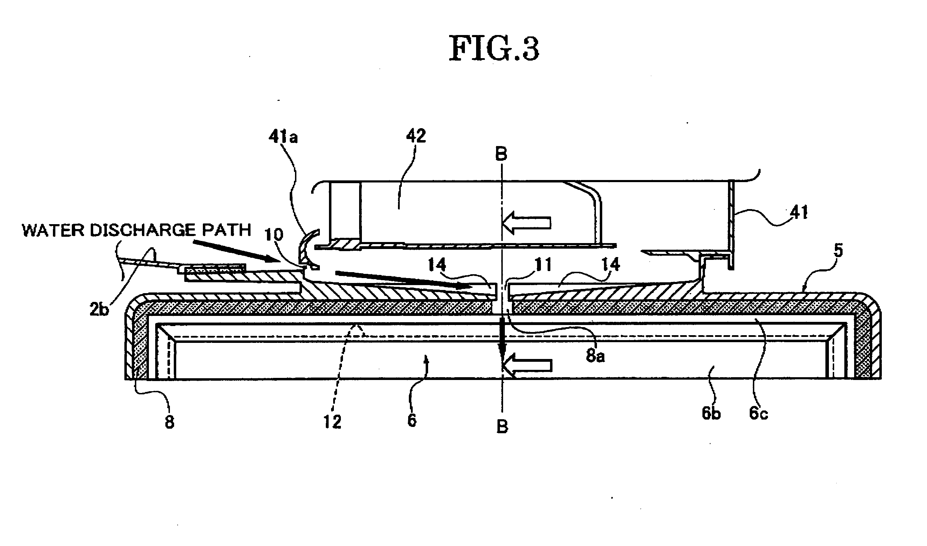

The water discharge groove 12 is formed by a half circular arc cross-section in the entire circumference of the frame portion 6c integral with the dummy evaporator 6 as illustrated in FIGs. 1-4. In addition, the dummy evaporator 6 is manufactured by resin molding using a molding die having the shape of the water discharge groove 12. The outer circumference face of the dummy evaporator 6 includes side faces, a top face, and a bottom face. As illustrated in FIG 1, the three faces including the side faces and the top face are fastened to the inner wall face of the air-conditioning case 5 via the air-sealing waterproof sheet 8 in an air-sealing waterproof state, and the lower face only includes a drain space 13 communicating with the drain pipe 9. The air-sealing waterproof sheet 8 includes a groove introduction hole 8a, which transfers the water dropped from the second water discharge hole 11 to the water discharge groove 12, in a position which corresponds to the second water discharge hole 11 as illustrated in FIG 3.

The drain structure includes the drain pan portion 5a of the air-conditioning case 5 which houses the dummy evaporator 6, and the drain pipe 9 provided in the drain pan portion 5a. In the heating and cooling vehicle air-conditioning system, this drain structure is an existing drain structure provided for discharging outside condensate water adhered onto an external fin of the evaporator.

The first water discharge hole 10 and the second water discharge hole 11 are connected by a guide groove 14 which inclines downwardly from the first water discharge hole 10 toward the second water discharge hole 11.

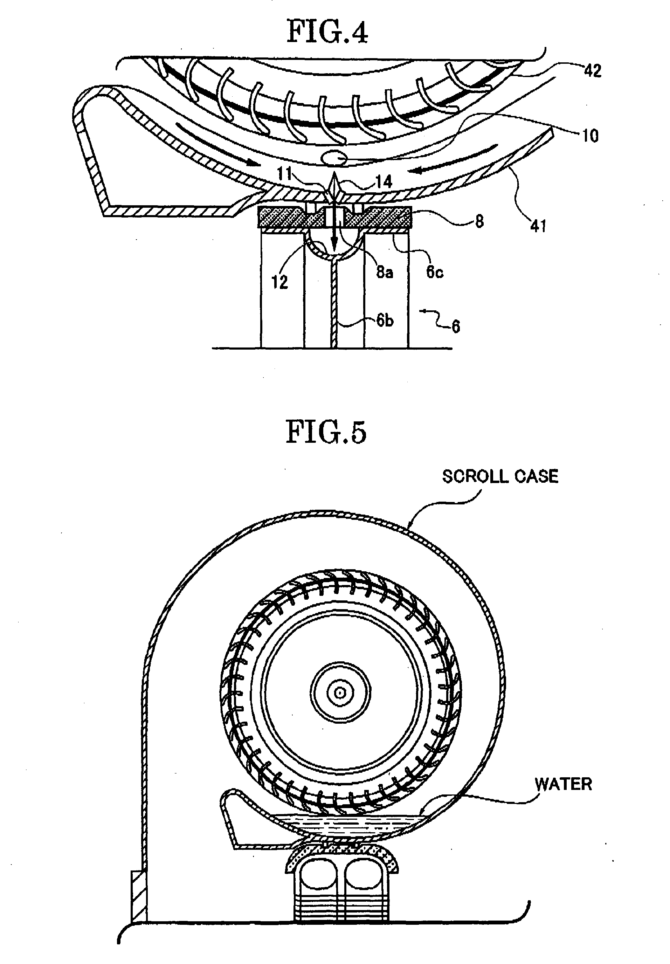

Next, how the present invention is achieved will be described. In the vehicle air-conditioning system in which the winding angle of the scroll casing is about 300° and the centrifugal fan has the horizontally disposed motor, if the water from the waterdrops that enters into the intake duct flows along the bottom wall face of the duct when the steam cleaning of the engine room is conducted, or if the water from snow or the waterdrops adhered onto the inner face of the intake duct flows along the bottom wall face of the duct when the blower is stopped, as illustrated in FIG. 5, the water is accumulated in the lower portion of the scroll casing. If the water accumulated in the lower portion of the scroll casing freezes, it damages the fan.

Consequently, in order to ensure the dischargeablity of the water accumulated in the lower portion of the scroll casing and the water flowing along the bottom wall face of the intake duct, a water discharging member such as a drain hose specially made for the intake duct is conventionally provided in the lower portion of the intake duct.

However, in the conventional water discharge structure, it is necessary to dispose the special drain hose in the intake duct. If the conventional water discharge structure is used for the air-conditioning unit, two water discharge structures including the drain hose specially made for the intake duct and the drain hose for the air-conditioning case side are required.

On the other hand, a vehicle air-conditioning system described in JP2004-98782A is proposed. In this system, a path which guides water accumulated in a bottom wall portion of an intake duct into a blower by a differential pressure between the blower and the intake duct is provided. Therefore, after the water guided into the blower by the differential pressure is sent by the blower when the blower is operated, the water is received by an evaporator, and the water is discharged from a drainpipe disposed in the lower portion of the evaporator as condensate water.

However, in the above system, the water guided into the blower is discharged outside by the operation of the blower, so the water guided into the blower can not be discharged outside when the blower is stopped.

Moreover, if a water discharge route is disposed in a position which is influenced by flow, swash in the blowing direction is generated, reverse flow of the discharged water is generated, or the blowing temperature (cooling and heating) is changed in the case of operating the blower which generates the flow in the air-conditioning case. For this reason, it is necessary to avoid an arrangement of the water discharge route in a position which is the influenced by the flow.

Consequently, the present inventor focused on a layout in which the lower position of the scroll casing is consistent with the upper end position of the dummy evaporator or the evaporator, which is often used as the layout of a vehicle air-conditioning system, and an alternative route along the inner wall face of the air-conditioning case which is not influenced by the flow. Based on these focused points, a structure is adopted which discharges the water flowing along the bottom wall face of the intake duct in the following order when the centrifugal fan is stopped or operated. The lower portion of the scroll casing of the centrifugal fan → the upper portion of the dummy evaporator → the water discharge groove of the outer circumference of the dummy evaporator → the drainpipe of the air-conditioning case. By this structure, the demand for simplifying the water discharge structure, the demand for ensuring the water discharge function when the blower is stopped, and the demand for disposing the water discharge route in a position which is not influenced by the flow are met.

Next, the function will be described. Hereinafter, the water discharge function when stopping/operating the centrifugal fan in the water discharge structure of the vehicle air-conditioning system according to the embodiment 1 will be described.

When stopping or operating the centrifugal fan 4, the water introduced into the intake duct 2 is discharged outside through the following processes.

### First Process

For instance, the water introduced into the intake duct 2 from the inside and outside air introduction duct 1 flows toward the lower portion of the scroll casing 41 of the centrifugal fan 4 on the downstream side along the inclination bottom wall faces 2a, 2b as illustrated in (a) of FIG 1.

### • Second Process

The water flowing toward the lower portion of the scroll casing 41 passes through the first water discharge hole 10 from the inclination bottom wall faces 2a, 2b, and is guided to the lower portion of the scroll casing 41 of the centrifugal fan 4 as illustrated in (b) of FIG. 1. In this case, the first water discharge hole 10 and the second water discharge hole 11 are connected by the guide groove 14, which inclines downwardly toward the second water discharge hole 11 from the first water discharge hole 10. Therefore, as illustrated in FIG. 3, the water from the first water discharge hole 10 is collected in the guide groove 14, and the water that the waterdrop adhered onto the inner face of the scroll casing 41 is condensed is collected in the guide groove 14 as illustrated in FIGs. 2, 4. More particularly, the water collected in the guide groove 14 is guided to the lower portion of the scroll casing 41 of the centrifugal fan 4.

### Third Process

The water guided to the lower portion of the scroll casing 41 of the centrifugal fan 4 is guided to the position where the water discharge groove 12 of the upper portion of the dummy evaporator 6 is disposed, through the second water discharge hole 11 and the groove introduction hole 8a from the lower portion of the scroll casing 41 as illustrated in (c) of FIG. 1.

### Fourth Process

The water guided to the water discharge groove 12 of the dummy evaporator 6 flows in the left direction in FIG. 1 along the water discharge groove 12 from the central upper portion of the dummy evaporator 6 as illustrated in (d) of FIG 1. After that, the water flows in the lower direction in FIG. 1. In addition, the water guided to the water discharge groove 12 of the dummy evaporator 6 may flow in the right direction in FIG 1 along the water discharge groove 12 from the central upper portion of the dummy evaporator 6, and then may flow in the lower direction in FIG 1 as illustrated in (d') of FIG 1 by the vehicle layout of the air-conditioning case 5, the inclination condition of the vehicle, or the like.

### • Fifth Process

The water dropped downwardly with the route along the water discharge groove 12 of the dummy evaporator 6 is collected in the drain pan portion 5a of the air-conditioning case 5 as illustrated in (e) of FIG 1.

### • Sixth Process

The water collected to the drain pan portion 5a of the air-conditioning case 5 is discharged outside form the drain pipe 9 of the air-conditioning case 5 as illustrated in (f) of FIG. 1.

As described above, since the water discharge structure according to the embodiment 1 discharges the water outside by using the existing drain pipe 9 which discharges the condensate water of the evaporator in the heating and cooling vehicle air-conditioning system outside, it is not necessary to add a new drain structure. Therefore, a simple structure can be achieved.

In the water discharge structure according to the embodiment 1, since the water discharge groove 12 is formed along the outer circumference of the dummy evaporator 6, the water discharge route is formed between the water discharge groove 12 and the inner wall face of the air-conditioning case 5 by a closed space. The water discharge route formed along the outer circumference of the dummy evaporator 6 (inner wall face of the air-conditioning case 5) is the closed space, so it is a route isolated from the flow which is not influenced by the wind pressure, pressure deformation or the like by the flow in the air distribution path 7.

Therefore, although the water discharge structure according to the embodiment 1 has a simple structure using the existing the drain structure, the following features can be achieved.
- Regardless of the stopping or operation of the centrifugal fan 4, the water accumulated in the lower portion of the scroll casing 41 can be eliminated outside.
- The generation of swash on the blowing side by the flow can be prevented.
- The generation of reversed flow of the discharged water by the flow can be prevented.
- The influence on the blowing temperature (heating) can be controlled.

Next, effects will be described.
In the water discharge structure of the vehicle sir-conditioning system according to the embodiment 1, the following effects can be obtained.

(1) The water discharge structure of the vehicle air-conditioning system, which has the intake duct 2, the centrifugal fan 4, the blow resistance member, and the air-conditioning case 5, and discharges water that enters toward the centrifugal fan 4 from the intake duct 2 outside the air-conditioning case 5, includes the first communicating section which communicates the lower portion of the scroll casing 41 for housing the centrifugal fan 4 to the bottom wall face 2a, 2b of the intake duct 2, the second communicating section which communicates the upper portion of the blow resistance member to the lower portion of the scroll casing 41, the water discharge groove 12 formed along the outer circumference of the blow resistance member in the position where the water drops from the second communicating section, and the drain structure which is disposed in the lower portion of the air-conditioning case 5, and discharges the water after passing through the water discharge groove 12 outside the air-eonditioning case 5. Accordingly, in the water discharge structure of the vehicle air-conditioning system, even if a simple structure is used, which uses the existing drain structure, regardless of the stopping or operation of the centrifugal fan 4, the water accumulated in the lower portion of the scroll casing 41 can be discharged outside, the generation of the swash or the reversed-flow of the discharged water when operating the centrifugal fan 4 can be prevented, and also the influence on the blowing temperature can be controlled.

(2) The first communicating section is the first water discharge hole 10 which communicates the lower position of the scroll casing 41 to the inclination bottom wall face of the intake duct 2 in the motor rotation axis direction of the centrifugal fan 4, the second communicating section is the second water discharge hole 11 which brings the upper position of the blow resistance member in line with the lower position of the scroll casing 41, and communicates both positions in the direction orthogonal to the motor rotation axis of the centrifugal fan 4, and the first water discharge hole 10 and the second water discharge hole 11 are connected by the guide groove 14 which inclines downwardly toward the second water discharge hole 11 from the first water discharge hole 10. Accordingly, even if simple communicating sections which do not increase the number of parts are used, the accumulation of the water toward the second water discharge hole 11 of the upper position of the dummy evaporator 6 can be prevented, and the water to be guided to the water discharge groove 12 can be effectively collected.

(3) The blow resistance member is the dummy evaporator 6, which includes the resistance clad sheet portion 6b having the air flow hole 6a and the frame portion 6c formed in the entire circumference of the resistance clad sheet portion 6b, and has the air flow resistance similar to an air flow resistance of an evaporator, and the water discharge groove 12 is formed in the entire circumference of the frame portion 6c integral with the dummy evaporator 6. Accordingly, in the vehicle air-conditioning system only for heating, which uses the air-conditioning case 5 for cooling and heating and uses the dummy evaporator 6, the water accumulated in the lower portion of the scroll casing 41 of the centrifugal fan 4 can be eliminated outside.

### [Embodiment 2]

Embodiment 2 is an example in which the water discharge structure according to the present invention is applied to a heating and cooling vehicle air-conditioning system equipped with an evaporator.

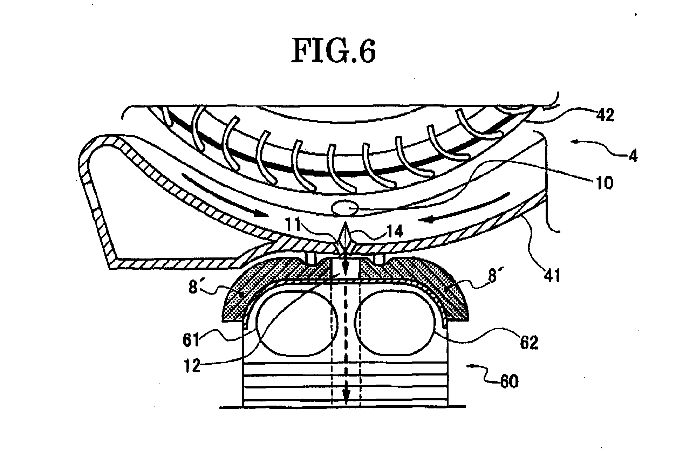

At first, the structure will be described with reference to FIG. 6.

The vehicle air-conditioning system to which the water discharge structure of the embodiment 2 is applied includes a centrifugal fan 4, a scroll casing 41, a blower fan 42, an air-sealing waterproof sheet 8', a first water discharge hole 10 (first communicating section), a second water discharge hole 11 (second communicating section), a water discharge groove 12, a guide groove 14, an evaporator 60 (blow resistance member), a header tank 61 on the windward side, and a header tank 61 on the leeward side. The vehicle air-conditioning system to which the water discharge structure of the embodiment 2 is applied is a heating and cooling vehicle air-conditioning system, and has the evaporator 60 which is a heat exchanger for cooling.

The evaporator 60 conducts heat exchange between the refrigerant flowing inside and the air passing through the outside, and cools the air by evaporating the refrigerant. The evaporator 60 has the outer circumference face wound by the air sealing waterproof sheet 8', and is set to the inner wall face of the air-conditioning case 5 via the air-sealing waterproof sheet 8'. This evaporator 60 includes a lower header tank on the windward side, a lower header tank on the leeward side, in addition to the upper header tank 61 on the windward side and the upper header tank 62 on the leeward side, a heat exchange tube on the windward side, a heat exchange tube on the leeward side, and an external fin, which are not illustrated in the figure.

As illustrated in FIG. 6, a pair of the air sealing waterproof sheets 8', 8' is disposed via a space, so that the water discharge groove 12 is formed by the opposed faces of a pair of the air-sealing waterproof sheets 8', 8' and the outer circumference face of the evaporator 60. In this case, when a pair of air-sealing waterproof sheets 8', 8' is disposed to be opposed to each other via the space, the two air-sealing waterproof sheets 8', 8' may be wound or the one air-sealing waterproof sheet 8' may be entirely wound, so as to eliminate the central portion in the shape of a slit. In addition, another structure is the same as embodiment 1, so the drawings and the description thereof are omitted.

Next, the function will be described. In the water discharge structure of embodiment 2, since the water discharge groove 12 is formed along a pair of air-sealing waterproof sheets 8', 8' provided in the outer circumference of the evaporator 60, the water discharge route by the closed space is formed between the water discharge groove 12 and the inner wall face of the air-conditioning case 5. Since the water discharge route formed along the outer circumference of the evaporator 60 (inner wall face of air-conditioning case 5) is the closed space, it is a route isolated from the flow which is not influenced by the pressure deformation and the wind pressure by the wind in the air distribution path 7.

Accordingly, the water discharge structure of embodiment 2 can achieve the following features although it has a simple structure using the existing drain structure similar to the water discharge structure of embodiment 1.
- Regardless of the stopping or operation of the centrifugal fan 4, the water accumulated in the lower portion of the scroll casing 41 can be eliminated outside.
- The generation of swash on the flowing side by the flow can be prevented.
- The generation of inversed flow of the discharged water by the flow can be prevented.
- The influence on the flowing temperature (cooling, heating) can be controlled.

Next, the effects will be described. In the water discharge structure of the vehicle air-conditioning system according to embodiment 2, the following effects can be obtained in addition to the effects (1), (2) of embodiment 1.

(4) The blow resistance member is the evaporator 60, which has the outer circumference face wound by the air-sealing waterproof sheet 8', and is set to the air-conditioning case 5 via the air-sealing waterproof sheet 8', and the water discharge groove 12 is formed by the opposed faces of a pair of air-sealing waterproof sheets 8', 8', which are disposed to be opposed to each other via a space, and the outer circumference face of the evaporator 60. Accordingly, in the heating and cooling vehicle air-conditioning system in which the evaporator 60 is set, the water accumulated in the lower portion of the scroll casing 41 can be eliminated outside. Moreover, by using the air-sealing waterproof sheet 8' which is wound to the outer circumference face of the evaporator 60 for absorbing shake or the like, the water discharge groove 12 can be easily formed.

As described above, according to the present invention, when stopping or operating the centrifugal fan, the water flowing along the bottom wall face of the intake duct is guided to the lower portion of the scroll casing of the centrifugal fan via the first communicating section from the bottom wall face of the duct, then, the water is guided to the upper portion of the air-conditioning case via the second communicating section from the lower portion of the scroll casing, and the water is led to the lower direction after flowing in the lateral direction along the water discharge groove formed in the inner face of the air distribution path of the air-conditioning case from the inner face position of the air-conditioning case where the water drops from the second communicating section, and then, the water is discharged outside from the drain structure of the air-conditioning case. Therefore, for example, if the water discharge route is disposed in a position which is influenced by the flow, the swash or the reversed-flow of the discharged water may be caused, and the blowing temperature may be changed. Moreover, the water is discharged by passing through the water discharge groove in the position isolated from the flow, so the influence on the blowing temperature can be controlled. As a result, regardless of the stopping or operation of the centrifugal fan, the water accumulated in the lower portion of the scroll casing can be eliminated with a simple structure using the existing drain structure, and also, in the operation of the centrifugal fan, the generation of the swash and the rcversed-flow of the discharged water can be prevented, and also the influence on the blowing temperature can be controlled.

Although the present invention has been described in terms of embodiments 1, 2, it is not limited thereto. It should be appreciated that variations may be made in the embodiments described by persons skilled in the art without departing from the scope of the present invention as defined by the following claims.

In embodiments 1, 2, the examples in which the first communicating section is the first water discharge hole 10 and the second communicating section is the second water discharge hole 11 are described. However, as the first and second communicating sections, a drain pipe or a water discharge groove can be used. More particularly, the first communicating section is not limited to the section described in embodiments 1, 2 as long as it communicates the lower portion of the scroll casing of the centrifugal fan to the bottom wall face of the intake duct. The second communicating section is also not limited to the section described in embodiments 1,2 as long as it communicates the upper portion of the evaporator to the lower portion of the scroll casing.

In the embodiment 1, the dummy evaporator 6 having one airflow hole 6a is illustrated as an example. However, a dummy evaporator having a plurality of small airflow holes which adjusts the airflow resistance by the number of airflow holes may be used.

In embodiment 1, the example in which the air-sealing waterproof sheet 8 is wound on the outer circumference of the evaporator 6 is illustrated. However, the dummy evaporator 6 can be directly set to the inner wall face of the air-conditioning case without winding the air-sealing waterproof sheet In addition, as illustrated in embodiment 1, if the air-sealing waterproof sheet is wound on the outer circumference of the dummy evaporator 6, the water discharge groove 12 can be formed by the air-sealing waterproof sheet 8 as illustrated in embodiment 2.

In embodiment 1, the example in which the upper position of the dummy evaporator 6 is consistent with the lower position of the scroll casing 41, such that the dummy evaporator 6 is disposed in a longitudinal direction is illustrated, and the example in which the upper position of the evaporator 60 is consistent with the lower portion of the scroll casing 41, such that the evaporator 60 is disposed in a longitudinal direction is illustrated. However, if the lower position of the scroll casing is not consistent with the upper position of the evaporator or the dummy evaporator, both positions can be communicated by means of a flexible pipe, or the dummy evaporator or the evaporator can be disposed at an inclination in an oblique direction.

In embodiments 1, 2, the water discharge structure is applied to the vehicle air-conditioning system including the centrifugal fan having the scroll casing in which the winding angle is about 300°. However, it can be applied to a vehicle air-conditioning system having a structure in which water is accumulated in a lower portion of a scroll casing even if it is a vehicle air-conditioning system including a centrifugal fan having a scroll casing in which the winding angle is 300° or below.

## Claims

1. A water discharge structure of a vehicle air-conditioning system, which has an intake duct (2), a centrifugal fan (4), and an air-conditioning case (5), and discharges water that enters toward the centrifugal fan (4) from the intake duct (2) outside the air-conditioning case (5),
the water discharge structure, comprising:
a first communicating section which communicates a lower portion of a scroll casing (41) for housing the centrifugal fan (4) to a bottom wall face of the intake duct (2);
a second communicating section which communicates an upper portion of the air-conditioning case (5) to the lower portion of the scroll casing (41);
a water discharge groove (12) formed along an inner face of an air distribution path of the air-conditioning case (5) from an inner face position of the air-conditioning case (5) where the water drops from the second communicating section; and
a drain structure which is disposed in a lower portion of the air-conditioning case (5), and discharges the water after passing through the water discharge groove (12) outside the air-conditioning case (5).

2. A water discharge structure of a vehicle air-conditioning system according to Claim 1, wherein the air-conditioning case (5) includes a blow resistance member orthogonal to a blow direction in a position of the inner face of the air distribution path corresponding to the lower portion of the scroll casing (41),
the second communicating section communicates an upper portion of the blow resistance member to the lower portion of the scroll casing (41), and
the water discharge groove (12) is formed along an outer circumference of the blow resistance member (6) from the inner face position of the air-conditioning case (5) where the water drops from the second communicating section.

3. A water discharge structure of a vehicle air-conditioning system according to Claim 2, wherein
the first communicating section is a first water discharge hole (10) which communicates a lower position of the scroll casing (41) to an inclination bottom wall face of the intake duct (2) in a motor rotation axis direction of the centrifugal fan (4),
the second communicating section is a second water discharge hole (11) which brings the upper position of the blow resistance member in line with the lower position of the scroll casing (41), and communicates both positions in a direction orthogonal to the motor rotation axis of the centrifugal fan (4), and
the first water discharge hole (10) and the second water discharge hole (11) are connected by a guide groove (14) which inclines downwardly toward the second water discharge hole (11) from the first water discharge hole (10).

4. A water discharge structure of a vehicle air-conditioning system according to Claim 2 or Claim 3, wherein
the blow resistance member is a dummy evaporator (6), which includes a resistance clad sheet portion (6b) having an air flow hole (6a) and a frame portion (6c) formed in an entire circumference of the resistance clad sheet portion (6b), and has an air flow resistance similar to an air flow resistance of an evaporator, and
the water discharge groove (12) is formed in an entire circumference of the frame portion (6c) integral with the dummy evaporator (6).

5. A water discharge structure of a vehicle air-conditioning system according to Claim 2 or Claim 3, wherein
the blow resistance member is an evaporator (60), which has an outer circumference face wound by an air-sealing waterproof sheet (8'), and is set to the air-conditioning case (5) via the air-sealing waterproof sheet (8'), and
the water discharge groove (12) is formed by opposed faces of a pair of air-sealing waterproof sheets (8', 8'), which are disposed to be opposed to each other via a space, and the outer circumference face of the evaporator (60).
